# EUROPEAN PATENT SPECIFICATION

(11) **EP 3 200 946 B1**
(45) Date of publication and mention of the grant of the patent: **30.01.2019**
(21) Application number: 15763031.0
(22) Date of filing: 16.09.2015
(51) Int. Cl.: B23D 65/00, B23K 26/34, B23K 31/02

(54) **METHOD OF MANUFACTURING A SAW ELEMENT AND SAW ELEMENT**
VERFAHREN ZUR HERSTELLUNG EINES SÄGEELEMENTS UND SÄGEELEMENT
MÉTHODE DE FABRICATION D'UN ÉLÉMENT DE SCIE ET ÉLÉMENT DE SCIE

(30) Priority: 01.10.2014 EP 14187315
(43) Date of publication of application: 09.08.2017
(73) Proprietor: NV Bekaert SA, 8550 Zwevegem (BE)
(72) Inventor: VANEECKE, Jan, B-8830 Gits (BE); BAEKELANDT, Tom, B-9052 Zwijnaarde (BE)
(74) Representative: Seynhaeve, Geert Filiep
(86) International application number: PCT/EP2015/071175
(87) International publication number: WO 2016/050508

(56) References cited:
- WO-A1-2012/119947
- WO-A1-2014/063910
- US-A1- 2007 071 907
- US-A1- 2009 064 983
- US-A1- 2013 267 154

## Description

### Technical Field

The invention relates to a method of manufacturing a saw element according to the preamble of claim 1, and the saw element according to the the preamble of claim 9 resulting from said method. The saw element can be used as the active sawing part in a saw device such as a saw disc, saw blade, saw cord or grinding tool. The case of a saw element in the form of a saw bead for use on a saw cord is of particular interest to the invention.

### Background Art

Saw elements used in saw blades, discs or cords for cutting hard and brittle materials such as natural or man-made stone are mostly produced by powder metallurgy. In this process, abrasive particles - that are usually diamond particles - are thoroughly mixed with mixtures of metal powders, cold pressed and sintered (hot pressing, free sintering or hot isostatic pressing) at elevated temperatures and pressures into a compact that is subsequently attached to a blade, disc or cord. The mixtures of the metal matrix material contain all kinds of metals of which the composition is chosen to compromise between:
- Sufficient but not too high wear as too wear resistant compacts will not expose the diamonds enough during use leading to polishing of the diamonds. On the other hand, too high wear will result in premature loss of diamond i.e. before the diamonds have cut sufficiently and the saw element wears too quickly.
- Temperature restrictions as the diamond particles are vulnerable to heat damage. Too high temperatures - say in excess of 1000°C for a prolonged period in time (minutes) - will reverse the diamond into graphite.

Therefore mixtures of metal powders having high melting temperatures such as cobalt, tungsten, iron or nickel with a minority of low melting metals like copper, tin, silver are used to improve consolidation (see e.g. WO 2008/040885). The resulting metallography shows grain cells of the constituting metals or alloys typical for solidifying slowly from the melt.

Already some years the use of laser clad metallic layers with abrasive particles has been suggested for use on saw blades or discs (EP 1027476, EP 1155768). When using diamond particles - and in particular when using man-made diamond particles - the deposition with laser cladding brings some particular problems. The temperature shock during deposition may start a graphitisation process at the core of the diamond, catalyzed by the metal catalyst inherently present in the diamond particle, whereby the diamond reverts back to graphite. As the massive substrate (the blade or the disc) acts as a heat sink, the thermal damage to the diamond can be controlled. In the case of saw beads laser cladding is more difficult as the tiny metal sleeve on which cladding takes place is only minute (less than a few grams in mass) and does not offer a heat sink (see e.g. WO 2012/119947 of the current applicant, which discloses the preambles of claims 1 and 9).

In WO2014166786, this problem is alternatively solved by a careful temperature control during cladding in that that the temperature is allowed to go above 1150°C but for a limited time of less than 200 ms. Diamond particles in general will not survive a heat shock in excess of 1300°C.

As a consequence metal matrix materials where the liquidus temperature - i.e. that temperature where a metal or metal alloy completely transforms from a solid to a liquid state under thermal equilibrium conditions - is above about 1100°C are generally excluded from laser cladding with diamonds as the metal or metal alloy will not completely have melted at that temperature. As a result the search for metal matrix materials suitable for co-cladding with diamond particles are limited to those metals and alloys that have a liquidus temperature between 400°C to 1000°C and maybe up to 1100°C, but not higher.

Possible nickel based alloys that have been suggested in WO 2012/119947 are:
- Ni-Cr-P in (e.g. with 13 to 15 wt% Cr, and 9.7 to 10.5 wt% P, the balance Ni), that have a liquidus temperature of about 900°C.
- Alternatively there is Ni-Cr-Fe-Si-B (e.g. 13 to 15 wt% Cr, 2.75 to 3.5 wt%B, 4 to 5 wt%Si, and 4 to 5 wt% Fe, balance Ni). But these alloys already have liquidus temperatures of 1040°C and higher.

Unfortunately, alloys comprising P, B, and Si tend to form hard phosphides, borides or silicide phases that are brittle (EP 1380381 B1) and are therefore less useful in saw elements. The precipitation of a brittle phases can be abated with the introduction of Mn that acts as a dispersant for the silicide formation as in a composition of Cr 20 wt%, Mn 14 wt%, and Si 6 wt%. However the liquidus temperature then further rises to 1080°C.

Laser clad abrasive layers therefore generally comprise low temperature melting copper based alloys such as brazes (copper and zinc as main elements) and bronzes (copper and tin as main elements) the latter being more preferred. Other preferred alloys are silver or indium based such Ag-Cu, Ag-Cu-Zn, or Ag-Cu-In. The addition of Sn, Ag, Zn, or In reduces the melting point of the alloy to below that of copper (1080°C).

When incorporating diamond particles into a laser clad layer it is necessary to also incorporate an active metal that wets the diamond particles and keeps the particles in the melt pool. Mostly titanium, sometimes chromium is used to this end. Therefore the bronzes used have 10 to 20 wt% Sn and between 2 and 10 wt% Ti, the remainder being copper.

The metallography of an abrasive layer deposited by laser cladding differs greatly from that of a layer obtained by the powder metallography. In the powder metallurgical route, all metallic phases are in thermal equilibrium due to the slowness of the process. In the laser-cladding molten metallic phases can be cooled so fast that equilibrium phases do not have the time to grow sufficiently. Therefore a laser clad layer may - under the appropriate conditions of deposition and solidification speed - show a fine, dentritic structure wherein phases with a lower solidification point are expelled form phases having a higher solidification point. The phases with a lower solidification point can then be found between the leaves and stems formed by the phases having a higher solidification point.

Although this fine metallographic structure obtained by laser cladding improves the wear resistance of the abrasive layer, the hardness of the commonly used, low melting point metal matrices is still not optimal for use in sawing applications. Although the diamond retention is good and the damage to the diamonds still acceptable, the abrasive layer still tends to wear too fast.

The inventors have therefore sought for other metal matrix compositions that can be laser clad and that provide excellent saw properties. In order to clad these abrasive layers also the method of deposition had to be re-invented.

### Disclosure of Invention

It is therefore an object of the present invention to provide a method of laser cladding a saw element that has an optimal sawing behaviour. With an 'optimal sawing behaviour' is meant that the wear of the abrasive particles is in sync with the wear of the metal matrix material surrounding the abrasive particles. The abrasive particles themselves are not or only slightly damaged during the laser cladding process. It is a further object of the present invention to disclose metal matrix material compositions that have been found to result in an optimal sawing behaviour of a saw element manufactured by laser cladding. Another object of the invention is to provide a saw element in the form of a saw bead that can be used in a saw cord.

According to the invention a method of manufacturing a saw element according to claim 1 is provided. The saw element is built on a metal substrate and comprises an abrasive layer deposited by laser cladding. The saw element is manufactured as follows:
- First, a metal substrate is provided. The metal substrate can be a circular saw disc or rectangular blade, or it can be a small metal sleeve as are used to make saw beads. The metal substrate can be made of stainless steel or a plain carbon steel, for example a low carbon steel;
- Secondly metal matrix material in powder form is carried in a gas flow to the metal substrate. The gas flow is an inert gas flow such as an argon gas flow;
- Abrasive particles are supplied either in the gas flow or separate from the gas flow;
- Energy is supplied on a specific spot on the metal substrate by means of a laser beam.

The laser beam locally heats up the metal matrix material at the beam spot on the metal substrate. The metal substrate and laser beam are made to move relative to one another by moving the metal substrate under the laser beam or moving the laser beam over the metal substrate or both. Concurrently, the abrasive particles are added to the forming abrasive layer. At the impinging laser beam spot, a process temperature will be reached that is determined by the heat input of the laser minus the heat extraction by the metal matrix powder added, that will partly or wholly melt, and the heat carried away by the metal substrate (either by heat conduction and/or by physically moving the metal substrate out of the laser beam). The method does not exclude that an abrasive layer is deposited on an already deposited abrasive layer. In the case of a saw bead, the track of the laser deposition repeatedly returns on an already deposited abrasive layer.

According to the invention, the metal matrix material powder is a mixture comprising a low melting metal powder and a high metal melting powder. The low melting metal powder has a liquidus temperature below the process temperature, while the high melting metal powder has a liquidus temperature that is above this processing temperature. Possibly the low and high melting metal powder are fed from different channels or they come in one and the same gas stream. The latter is more preferred as the intermixing is more intimate.

The inventors intuitively reasoned as follows: as generally the high melting metal powders are harder, the use of a mixture of a low melting phase that completely liquefies during deposition and a high melting metal powder that may not completely melt during deposition will result in a metal matrix wherein harder metallic regions will be welded by the softer, low melting phases, thereby resulting in an overall harder metal matrix material. As mentioned this reasoning is intuitive and by no means limitative to the invention.

In a further refined method, the solidus temperature of the high melting metal powder is above the processing temperature.

The liquidus temperature is that temperature at which a solid metal or metal alloy transforms to a completely liquid state under thermal equilibrium conditions. The solidus temperature is that temperature at which a liquid metal or metal alloy completely transforms to a solid state. The liquidus temperature is always larger than the solidus temperature.

In a further preferred realisation of the invention, the process temperature at the surface of the abrasive layer is between 1000°C and 1300°C or even more preferred between 1000°C and 1150°C. This process temperature suffices to melt and weld the powders together while the abrasive particles (in particular diamonds) are not affected. As the cooling rate in laser cladding must be substantial in order to obtain the desired metallographic structures, the duration of the heating up to the process temperature remains limited. For example for temperatures of 1150°C the duration of the heat exposure to the diamonds should be less than 200 ms, for temperatures 1200°C this should be less than 100 ms and for temperatures of 1250° less than 50 ms. Withing those bounds, the damage to the diamond particles remains reasonable.

Preferable the process temperature is steered by adjusting the energy input of the laser. Even more preferred is if the energy input of the laser is steered in a feedback loop based on the measured process temperature. The process temperature is sensed by a high speed temperature sensor, such as an infrared temperature sensor or camera. A camera has the advantage that a real time evaluation can be made of the overall temperature field in the heated region. With high speed is meant: at least 100 measurements per second. At lower speeds the temperature is measured too late and the feedback to the laser is in delay with the temperature at the laser spot.

Preferably the low melting metal powder is an alloy based on copper. A copper based alloy is an alloy wherein the weight percent of copper is larger than any one of the weight percentages of the other elements in the alloy. The weight percent of copper is the balance such that the percentages of copper and the other elements add up to 100 percent.

Notable examples of copper based alloys are brass (copper and zinc), bronze (copper and tin) and alloys of copper with silver, bismuth, antimony, indium, lead and phosphorous. Ternary or even quaternary alloys are also possible for example in leaded tin bronze, or phosphor bronze. For convenience the group of metals consisting of tin, zinc, silver, bismuth, antimony, indium, lead and phosphorous will be referred to as the first group of elements. Most preferred is tin as an alloying element to copper. Typical examples are Cu-Sn (with 8 to 14 % by weight tin), or CuP (with 2 to 10% by weight phosphorous).

Preferably the high melting metal powder comprises one or more metals out of a second group of consisting of nickel, iron, cobalt, and manganese. Most preferred are alloys that at least comprise a substantial amount of nickel i.e. are nickel based alloys. Nickel on its own is also preferred. To this end nickel powder e.g. as obtained through the carbonyl route can be used. The powder is pure nickel except for inevitable trace elements.

Nickel based alloys are preferably but not exclusively:
- Inconel 600 (14 to 17 %wt Cr, 6 to 10 %wt Fe, the balance Ni and inevitable trace elements);
- Inconel 625 (20 to 23 %wt Cr, max 5 %wt Fe, 8 to 10 %wt Mo, 3.15 to 4.15 wt% Nb, the balance Ni and inevitable trace elements);
- Hastalloy X (20.5 to 23 %wt Cr, 17 to 20 wt% Fe, 8 to 10 %wt Mo, 0.05 to 0.15%wt C, 0.2 to 1 wt% W, 0.5 to 2.5 wt%Co, the balance Ni and inevitable trace elements)

Alternatively iron based alloys such as stainless steels can be used. Stainless steels comprise at least 10.5% wt% chromium. Most preferred are stainless steels that also comprise nickel such as:
- Incoloy 800 (19 to 23 wt% Cr, 015 to 0.6 wt% Al, 0.15 to 0.6 wt% Ti, 30 to 35 wt% Ni the balance Fe and other trace elements).
- SS-316L (16 to 18 wt% Cr, 10 to 14 wt% Ni, 2 to 3 wt% Mo, the balance Fe and other trace elements).

Additionally and preferably, the low melting metal powder and/or the high melting metal powder further comprises one or more of the active metal group consisting of chromium, titanium, vanadium, tungsten, zirconium, niobium, molybdenum, tantalum, and hafnium. Most preferred is titanium as an active metal. Preferably the titanium is part of the lower melting metal powder, for example in a bronze (Cu-Sn-Ti). Chromium is preferred as an alloying element to the high melting metal powder.

The presence of an active metal is preferred in order to retain the abrasive particles in the metal matrix material. The abrasive particles themselves preferably are carbon containing particles such as diamond, silicon carbide, tungsten carbide, titanium carbide or mixtures thereof as they are easily wetted by all active metals mentioned. Nitrides, such as cubic boron nitride are best wetted with titanium. Most preferred is diamond (i.e. almost pure carbon) either man-made or natural, the former being more preferred for its lower cost.

The median size of the low or high temperature melting metal powder is not limitative to the invention, but in general is between 5 and 100 µm. The size of the metal powder is such that a uniform flow rate in the gas flow can be obtained.

In general abrasive particles with a size between 100 µm and 600 µm can be used in the method, more preferably between 180 µm and 500 µm. Particles for stone cutting are preferably large grit i.e. with wide range grit sizes US Mesh size 30/40, Mesh size 40/50 or Mesh size 50/60 (Mesh sizes are according to US Standard ASTME 11, the higher the numbers, the smaller the particles). Most preferred for sawing elements is a mesh size 40/50. A 40 mesh sieve has square openings of 420 µm side where through smaller sized particles pass. Part of those smaller particles will be held by the 50 mesh sieve with square openings of 297 µm side. The mean size of the remaining particles is about 427 µm in the grit size designation system according FEPA (Federation of European Producers of Abrasives) that assigns a mean size for every mesh size. Smaller mesh sizes will be polished during use and consequently will not abrade the stony material away.

Not much of the high melting metal powder must be present in order to have a distinguishing effect on the sawing behaviour of the saw element. The inventors have found that even less than 10 percent by weight fraction of high melting metal powder in the total matrix metal powder flow suffices to improve the hardness of the metal matrix material. On the lower end at least 0.5 percent by weight of high melting metal powder must be present in the matrix metal flow before an advantageous effect can be observed. Better results are obtained with between 1 and 8 percent by weight of high melting metal powder in the total matrix metal powder flow. The optimum is somewhere between 4 and 6 percent by weight.

According to the invention a saw element defined by the features of claim 9 is provided.

The saw elements, when properly obtained according the methods described, still show a dendritic metallographic structure but the presence of a high melting metal powder results in an increased hardness of the metal matrix material.

Hardness of metallic materials is usually determined in a Vickers hardness test according ISO 6507-1: *'Metallic materials* - *Vickers hardness test - Part 1: Test method'*. In this test a pyramidal diamond indenter is pressed onto the polished cross section of the metal matrix material. The indentation remaining after removal of the indenter has a pyramidal shape with an average base diagonal of 'd' in mm. Within this application the indentation force used on the indenter is 300 gf or 2.94N. The Vickers hardness is then calculated from the indentation force and the measured average diagonal 'd' and is expressed on a HV scale in units of gigapascal (GPa). The force is held for 10 seconds. The average over at least 10 positions is taken. Indentation positions are at least 3 times 'd' away from one another, the edge and abrasive particles in order not to distort the measurement.

According to the invention, the metal matrix material of the saw element has at least a Vickers hardness of 200 HV, more preferable a value above 210 HV or even above 220 HV or over 240 HV.

The more preferred overall elemental compositions of the metal matrix material of the saw element comprise at least 60 percent by weight of copper, and between 0.5 to 10 percent by weight in total of one or more elements out of the second group consisting of nickel, iron, cobalt, and manganese. The fraction of copper can be higher than 70 percent by weight or even higher than 75 percent by weight. In any composition, the copper is the balancing element that makes the total composition 100% by weight.

Alternatively the amount of elements out of the second group can be between 1 to 7 percent by weight, or even more specifically between 1.2 to 5 percent by weight.

The metal matrix material further comprises elements of the first group consisting of low temperature melting elements: tin, zinc, silver, bismuth, antimony, indium, lead and phosphorous and the active metal group consisting of chromium, titanium, vanadium, tungsten, zirconium, niobium, molybdenum, tantalum, and hafnium.

In a more preferred embodiment the metal matrix material of the saw element comprises between 7 and 20 percent by weight in total of the elements out of the first group, for example between 8 and 15 percent by weight and between 5 and 15 percent by weight in total of elements out of the active metal group. This in addition to the at least 60 percent by weight of copper (the balance), and between 0.5 to 10 percent by weight in total of one or more elements out of the second group.

These are preferred compositions of the metal matrix material and do not include the weight fraction of the abrasive particles. To determine the composition the metal matrix material can be dissolved in suitable reagents and analysed by the standard techniques known in analytical chemistry. Alternatively, and more preferably, the elemental composition can be determined by means of physical microanalysis techniques like Energy-Dispersive X-Ray Analysis (EDX) or Wavelength Dispersive X-Ray Analysis (WDX). Care should be taken that sufficient depth and width of the surface is sampled and averaged.

The introduction of a high melting metal powder in the laser cladding process makes the use of other ceramic hardening materials in the abrasive layer superfluous. Many times these ceramic oxides (e.g. aluminium oxide), carbides (e.g. tungsten carbide), nitrides or borides are added in order to increase the wear resistance of the metal matrix material. When such materials are introduced in laser clad abrasive layers for saw elements, they many times cause more harm than benefit. They tend to float or sink in the liquid metal pool due to their difference in density with the metal pool thereby forming layers enriched with these materials forming a preferred fracture plane through the saw element. Or they do not wet and bind very well to the metal matrix material and weaken the matrix rather than strengthening it. Therefore a particularly preferred embodiment is a saw element that is free of added ceramic oxides, carbides, nitrides or borides. However, this does not exclude that ceramic oxides, carbides, nitrides or borides may form during laserdeposition. These are then present in microscopic regions and do not harm the strength of the saw element.

The invention is particularly useful to produce saw beads. Such a saw bead is defined as a saw element according to claim 13 and comprises a metal sleeve as the metal substrate to put the abrasive layer on. The abrasive layer is deposited in subsequent layers while the sleeve is made to rotate under the laser cladding head. Reference is made to WO 2012/119946 and WO 2012/119947 of the current applicant. This is a third aspect of the invention.

According a fourth aspect of the invention a saw cord according to claim 14 is provided. Such a saw cord comprises a steel cord with saw beads threaded thereon. The saw beads are made and have the composition as explained above. Possibly the beads are separated with a polymer sleeve between the beads.

### Brief Description of Figures in the Drawings

Figure 1: Vickers hardness of the abrasive layers of different composition
Figure 2: Influence of the amount of Inconel 625 in the metal matrix material powder on the hardness of the abrasive layer.

### Mode(s) for Carrying Out the Invention

As saw elements saw beads for use in a sawing cord were chosen. The methods and compositions revealed below can however easily be transferred to any other type of saw element. Making a saw bead with laser cladding on a tiny metal sleeve is in that respect more difficult than putting saw elements by laser cladding on a massive substrate.

In a series of experiments laser clad saw beads were made on mild steel cylindrical sleeves of length 12 mm, having an outer diameter of 5.00 mm and a wall thickness of 0.575 mm.

The following type of equipment was used:
Laser cladding system
   - Diodelaser 'Laserline LDF 2.5 kW' in continuous mode at wavelengths of 808 and 940 µm.
   - A lateral feed channel for feeding metal matrix powder and abrasive particles, the particles being separately controllable from the metal matrix powder flow;
Powder handling equipment:
   - Two Sulzer Metco Twin powder hoppers
   - Gas supply: argon.

One powder hopper silo was used to feed the abrasive particles in the form of diamonds. Diamonds were man-made diamonds sifted to mesh 40/50 with a median size of 415 µm.

The twin powder hopper allowed mixing two different metal powders in the flow of gas by changing the feed speed of the one to the other. The two different powders are mixed with the diamonds in a mixing chamber before being fed through the feed channel to the saw bead.

As a low melting metal powder a titanium enriched bronze was used of composition Cu (the balance) - Sn (13 wt%) - Ti (9 wt %) obtained from Phoenix Scientific Industries Ltd. The reactive metal - titanium - is therefore incorporated in the low melting metal powder. Differential Scanning Calorimetric analysis revealed that solid-solid phase transitions starts at about 765°C and that the powder completely turns into liquid (liquidus temperature) at 972°C. Hence, the melting temperature is below 1000°C. The median size of the particles was between 20 and 25 µm.

As a high melting metal powder different compositions were tried:
- Pure iron powder with a melting point of 1535°C
- Stainless steel 316L powder with a melting range between 1371 to 1399°C. The powder was sieved to a maximum size of 75 µm.
- Inconel 625 powder with a melting range (solidus to liquidus) of 1290 to 1350°C. The particle size was between 15 to 45 µm.

While the feed rate of the low melting metal powder of the first hopper was kept constant the feed rate of the second hopper with the high melting metal powder was varied. The weight percentage of the high melting metal powder in the total of metal matrix material in the saw bead was determined by SEM-EDX.

No ceramic filler, such as tungsten carbide, aluminiumoxide or other, was added to the abrasive layer.

The metal substrate in the form of a sleeve is made to rotate at 200 rpm. The laser is ignited and after a rotation the supply of the mix of low and high melting metal powder is blown through the feed channel together with the diamond particles. The temperature was monitored through an E-Maqs camera operating at a 220 Hz sampling frequency measuring at a 740 nm infrared bandpass filter. The temperature was held at about 1100°C.

In the first trials the copper tin titanium low melting powder was blended with iron powder. The oxidisation reaction of the iron resulted in a blinding of the E-Maqs camera and no reliable layer could be formed. However, hardness measurements could be performed.

The second series of trials with stainless steel 316L ran better and beads could be successfully produced. They showed an increased hardness compared to the reference samples made with the low melting metal powder component only. Note that a second reactive metal is now present- chromium - coming from the high melting temperature metal powder, while a first reactive metal -titanium - is present in the low melting temperature powder.

The third series of trials with Inconel 625 ran without problems. An even higher hardness was measured. First, second and third series of trials were performed with identical settings for the first and second powder feeder.

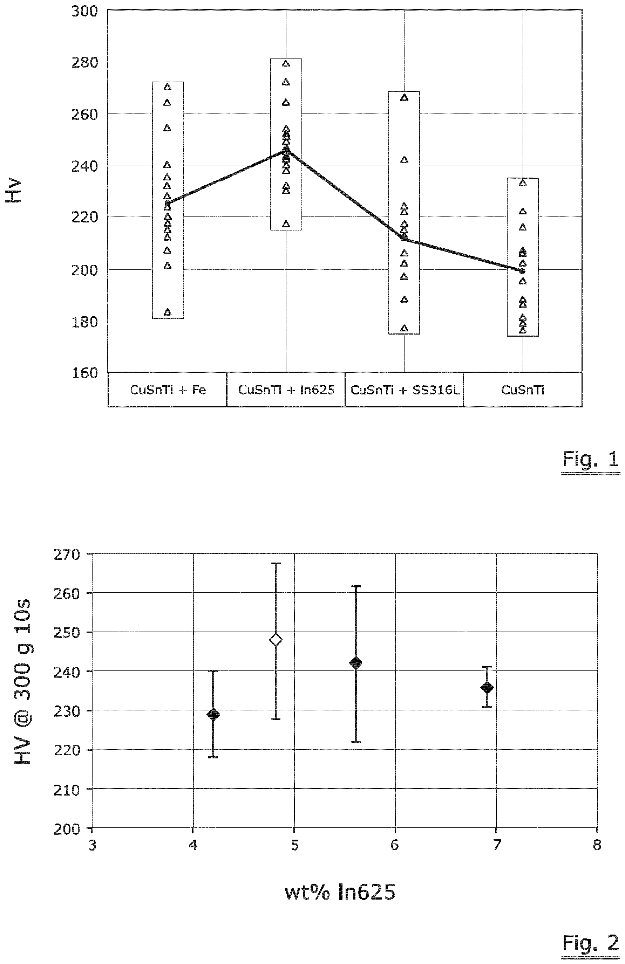

Figure 1 shows the measured Vickers hardness of the different abrasive layers. The abrasive coating made of Cu-Sn-Ti only showed an average hardness of about 199 HV measured at 300g after 10 seconds. The coating reinforced with stainless steel shows an average value of 210 HV, the coating with iron powder an average of 225 HV and the coating with blended with Inconel 625 showed the highest hardness: on average about 245 HV was measured.

In a second series of experiments, a series of trials with different amounts of Inconel 625 were performed. By adjusting the feed speed of the second hopper a different weight fraction of Inconel 625 in the total of the blended powder flow could be obtained. The weight fraction of Inconel 625 obtained in the blended material flow were: 4.2, 4.8, 5.6 and 6.9 wt%.

The results are depicted in Figure 2. It turns out that a maximum hardness is obtained for a percentage of weight of Inconel 625 in the total metal matrix material of between 5 and 6%. An optimal hardness of the metal matrix material was obtained with a powder composition of 95.2 wt% of CuSnTi with 4.8 wt% of Inconel 625 (Table I, the open diamond in Figure 2). A too high percentage of high melting metal powder gives a deteriorating effect on the hardness. A metallurgical analysis learned that the sample with the largest load of high melting metal powder (6.9 wt%) showed needle like structures that were brittle and differing from the familiar dendritic like structures.

The total elemental composition was as follows (SEM-EDX measurement)

**Table I**

| Element | Ni | Cu | Sn | Cr | Ti | Nb | Mo | Sum |
|---|---|---|---|---|---|---|---|---|
| Wt% | 2,3 | 76,5 | 10,6 | 1,1 | 8,1 | 0,4 | 1,0 | 100 |
| CuSnTi | | 76,5 | 10,6 | | 8,1 | | | 95,2 |
| Inconel 625 | 2,3 | | | 1,1 | | 0,4 | 1,0 | 4,8 |
| First group | | | 10,6 | | | | | 10,6 |
| Second group | 2,3 | | | | | | | 2,3 |
| Active metals | | | | 1,1 | 8,1 | 0,4 | 1,0 | 10,6 |

With the optimal composition of Cu-Sn-Ti with Inconel 625 a series of saw beads were fabricated. The saw beads were strung on a 7x7/3.5 mm steel cord and polyurethane was injection moulded between the beads to obtain a saw cord. In a field test five of such saw cords all were able to cut 11.5 square meter of granite of different hardness degrees per meter of saw cord. In this number account has been taken of the correction factors attributed to the different types of granite as is customary in the field.

In a second series of experiments pure Ni powder (liquidus temperature of 1455°C, median particle size 40 µm) was added to a flow of Cu-Sn-Ti (80.2/12.2/7.7 %wt fractions, liquidus temperature 970°C). The resulting elemental compositions (determined by SEM-EDX) and the Vickers hardness measured on the metal matrix material are reproduced in Table II

**Table II**

| Composition (in %wt) | | | | Hardness (HV) | |
|---|---|---|---|---|---|
| Cu | Sn | Ti | Ni | Avg | Std |
| 80.2 | 12.2 | 7.7 | 0.0 | 183 | 8 |
| 79.3 | 12.3 | 7.4 | 1.0 | 200 | 6 |
| 79.5 | 11.8 | 7.1 | 1.5 | 217 | 13 |
| 79.0 | 11.8 | 7.0 | 2.2 | 230 | 13 |

For those compositions having a hardness above or equal to 200 HV, the amount of active metal (Ti only) is between 7.0 and 7.4%wt, the amount of elements in the first group is (Sn only) is between 11.8 and 12.3 %wt, the amount of metals out of the second group (Ni only) is between 1.0 and 2.2 %wt. The balance of cupper is between 79.0 to 79.3 %wt i.e. well above 60 %wt. These all fall within the suggested ranges. It is clear that even a minor addition of a second group element gives a marked increase in hardness.

An in-depth study by means of XRD, SEM (EDX and Electon Probe Microanalysis EPMA), and LOM (Light Optical Microscopy) on the different phases formed when adding a high temperature melting metal powder such as Ni or Inconel to a low temperature melting bronze like Cu-Sn (13%wt of Sn) with additional active metal Ti (9%wt of Ti) revealed the following features:
- The pure Cu-Sn-Ti (13/9) shows after cladding a base form that is composed of copper dendrites (Phase A). In between the dendrites, a fine lamellar structure is present, presumably containing (Cu)Sn₃Ti₅ (Phase B) and Cu.
- Adding Inconel or Ni to the powder, changes this microstructure completely. Ni and Inconel have the same effect in that respect. At low nickel concentrations (< 5 %wt Ni) the dendrites and lamellar structure is still present, but a (Cu, Ni, Sn, Ti) phase forms (Phase C). At high nickel concentration (≥ 5 %wt Ni) the Phase A dendrites disappear and the Cu is found between elongated (Cu, Ni, Sn, Ti) regions. Adding more Ni or Inconel does not increase the presence of Phase C further. However, beads resulting from such composition turn out to be less good.

- Increasing the Sn amount (starting from Cu-Sn(24 %wt)-Ti (5 %wt) or Cu-Sn(23 %wt)-Ti (10 %wt)) appears to suppress the formation of Phase C.
- The (Cu, Ni, Sn, Ti) Phase C is not found in XRD databases.

However, the peaks closely match the crystal structure of Ni₂SnTi. Annealing tests at 700°C did not reveal Phase C to be metastable: XRD peaks remain.
- In Phase C the four metals Cu, Ni, Sn and Ti are present in about equal amounts (around 25% each) although large spatial variations are found (SEM-EPMA).
- Rietveld's refinement method applied on the XRD spectra reveals that Phase C (taking the peaks of Ni₂TiSn as reference) accounts for at least 10% of the total phase fractions even at low nickel additions.
- From LOM it appears that the Phase C is present in globular regions.

Adding more nickel completely eliminates the dendritic structures.
- Nano-indentation trials show that Phase C regions have a hardness intermediate to that of Phase A (Cu) and Phase B ((Cu)Sn₃Ti₅) regions: 7000 to 10000 MPa (Phase C) compared to 3500 MPa (Phase A) and 15000 (Phase B).

It is presumed that the presence of the high melting metal powder influences the overall hardness of the low melting metal powder. In that respect the presence of Phase C comprising (Cu, Sn, Ti, Ni) seems to be a good indicator for the right hardness balance.

It is therefore asserted by the inventors that a good saw element will show a Phase C fraction between 7 and 13%, or even more preferred between 9 and 11% as determined in a Rietveld refinement method applied on the XRD spectra obtained on the saw element.

## Claims

1. Method of manufacturing a saw element comprising a metal substrate and an abrasive layer comprising the steps of:
- Providing a metal substrate;
- Providing a supply of metal matrix material in powder form carried in a gas flow to said metal substrate;
- Supplying abrasive particles;
- Supplying energy by a laser beam;
wherein said laser beam heats said metal matrix material on said metal substrate that is made to move relative to said laser beam, while said abrasive particles are added to the forming abrasive layer, said heating being effected at a process temperature
**characterised in that**
said metal matrix material powder is a mixture comprising a low melting metal powder and a high melting metal powder, said low melting metal powder having a liquidus temperature below said process temperature, said high melting metal powder having a liquidus temperature above said process temperature.

2. The method according to claim 1 wherein the solidus temperature of said high melting metal powder is above said process temperature.

3. The method according to any one of claims 1 or 2 wherein said process temperature is between 1000°C and 1300°C.

4. The method according to any one of claims 1 to 3 wherein said low melting metal powder is copper alloy based;

5. The method according to claim 4 wherein said low melting metal powder further comprises one or more out of a first group of elements consisting of tin, zinc, silver, bismuth, antimony, indium, lead, and phosphorous.

6. The method according to any one of claims 1 to 5 wherein said high melting metal powder comprises one or more metals out of a second group consisting of nickel, iron, cobalt, and manganese.

7. The method according to any one of claims 1 to 6 wherein said low melting metal powder and/or said high melting metal powder further comprises one or more of the active metal group consisting of chromium, titanium, vanadium, tungsten, zirconium, niobium, molybdenum, tantalum, and hafnium.

8. The method according to any one of claims 1 to 7 wherein the weight fraction of said high melting metal powder in the total of said metal matrix material powder is less than 10 percent.

9. A saw element comprising a metal substrate with an abrasive layer deposited thereon, said abrasive layer comprising abrasive particles held in a metal matrix material **characterized in that** said abrasive layer is deposited by a method according to any of claims 1 to 8,
wherein the metal matrix material powder supplied to the metal substrate is a mixture comprising a low melting metal powder and a high melting metal powder, said low melting metal powder having a liquidus temperature below the process temperature, said high melting metal powder having a liquidus temperature above the process temperature, and wherein
the Vickers hardness of the metal matrix material is at least 200 HV measured at an indentation force of 2.94 N held for 10 s and averaged over at least ten positions on a polished cross section of the metal matrix material..

10. The saw element according to claim 9 wherein the overall composition of said metal matrix material comprises at least 60 percent by weight of copper and between 0.5 to 10 percent by weight of one or more metals out of a second group consisting of nickel, iron, cobalt and manganese .

11. The saw element according to claim 10, wherein the overall composition of said metal matrix material further comprises between 7 and 20 percent by weight of elements out of a first group consisting of tin, zinc, silver, bismuth, antimony, indium, lead, and phosphorous and between 5 and 15 percent by weight of metals out of an active metal group consisting of chromium, titanium, vanadium, tungsten, zirconium, niobium, molybdenum, tantalum, and hafnium.

12. The saw element according to any one of claims 9 to 11 wherein said abrasive layer is free of added ceramic oxides, carbides, nitrides or borides.

13. The saw element according to any one of claims 9 to 12 wherein said saw element is a saw bead comprising a metal sleeve as a metal substrate on which said abrasive layer is deposited.

14. A saw cord comprising a steel cord with saw beads threaded thereon, **characterized in that** said saw beads are saw elements according to claim 13.

## Patentansprüche

1. Verfahren zum Fertigen eines Sägeelements, umfassend ein Metallsubstrat und eine Schleifschicht, das die folgenden Schritte umfasst:
- Bereitstellen eines Metallsubstrats;
- Bereitstellen einer Versorgung mit Metallmatrixmaterial in Pulverform, das in einem Gasstrom zu dem Metallsubstrat transportiert wird;
- Zuführen von Schleifpartikeln;
- Zuführen von Energie durch einen Laserstrahl;
wobei der Laserstrahl das Metallmatrixmaterial auf dem Metallsubstrat erhitzt, das so beschaffen ist, dass es sich relativ zu dem Laserstrahl bewegt, während die Schleifpartikel der sich bildenden Schleifschicht hinzugefügt werden, wobei das Erhitzen bei einer Prozesstemperatur gewirkt wird, **dadurch gekennzeichnet, dass** das Metallmatrixmaterialpulver eine Mischung ist, umfassend ein niedrigschmelzendes Metallpulver und ein hochschmelzendes Metallpulver, wobei das niedrigschmelzende Metallpulver eine Liquidustemperatur unter der Prozesstemperatur hat und das hochschmelzende Metallpulver eine Liquidustemperatur über der Prozesstemperatur hat.

2. Verfahren nach Anspruch 1, wobei die Solidustemperatur des hochschmelzenden Metallpulvers über der Prozesstemperatur liegt.

3. Verfahren nach einem der Ansprüche 1 oder 2, wobei die Prozesstemperatur zwischen 1000 °C und 1300 °C liegt.

4. Verfahren nach einem der Ansprüche 1 bis 3, wobei das niedrigschmelzende Metallpulver auf einer Kupferlegierung basiert;

5. Verfahren nach Anspruch 4, wobei das niedrigschmelzende Metallpulver ferner eines oder mehrere aus einer ersten Gruppe von Elementen, bestehend aus Zinn, Zink, Silber, Bismut, Antimon, Indium, Blei und Phosphor, umfasst.

6. Verfahren nach einem der Ansprüche 1 bis 5, wobei das hochschmelzende Metallpulver ein oder mehrere Metalle aus einer zweiten Gruppe, bestehend aus Nickel, Eisen, Kobalt und Mangan, umfasst.

7. Verfahren nach einem der Ansprüche 1 bis 6, wobei das niedrigschmelzende Metallpulver und/oder das hochschmelzende Metallpulver ferner eines oder mehrere aus der aktiven Metallgruppe, bestehend aus Chrom, Titan, Vanadium, Wolfram, Zirconium, Niob, Molybdän, Tantal und Hafnium, umfasst.

8. Verfahren nach einem der Ansprüche 1 bis 7, wobei der Gewichtsanteil des hochschmelzenden Metallpulvers in der Gesamtheit des Metallmatrixmaterialpulvers kleiner als 10 Prozent ist.

9. Sägeelement, umfassend ein Metallsubstrat mit einer darauf abgelagerten Schleifschicht, wobei die Schleifschicht in einem Metallmatrixmaterial gehaltene Schleifpartikel umfasst, **dadurch gekennzeichnet, dass** die Schleifschicht durch ein Verfahren nach einem der Ansprüche 1 bis 8 abgelagert wird, wobei das Metallmatrixmaterialpulver, das dem Metallsubstrat zugeführt wird, eine Mischung ist, umfassend ein niedrigschmelzendes Metallpulver und ein hochschmelzendes Metallpulver, wobei das niedrigschmelzende Metallpulver eine Liquidustemperatur unter der Prozesstemperatur hat und wobei das hochschmelzende Metallpulver eine Liquidustemperatur über der Prozesstemperatur hat, und wobei die Vickers-Härte des Metallmatrixmaterials mindestens 200 HV ist, gemessen bei einer Eindrückkraft von 2,94 N, 10 s gehalten und über zumindest zehn Positionen auf einem polierten Querschnitt des Metallmatrixmaterials gemittelt.

10. Sägeelement nach Anspruch 9, wobei die Gesamtzusammensetzung des Metallmatrixmaterials mindestens 60 Gewichtsprozent Kupfer und zwischen 0,5 und 10 Gewichtsprozent von einem oder mehreren Metallen aus einer zweiten Gruppe, bestehend aus Nickel, Eisen, Kobalt und Mangan, umfasst.

11. Sägeelement nach Anspruch 10, wobei die Gesamtzusammensetzung des Metallmatrixmaterials ferner zwischen 7 und 20 Gewichtsprozent von Elementen aus einer ersten Gruppe, bestehend aus Zinn, Zink, Silber, Bismut, Antimon, Indium, Blei und Phosphor, und zwischen 5 und 15 Gewichtsprozent von Metallen aus einer aktiven Metallgruppe, bestehend aus Chrom, Titan, Vanadium, Wolfram, Zirconium, Niob, Molybdän, Tantal und Hafnium, umfasst.

12. Sägeelement nach einem der Ansprüche 9 bis 11, wobei die Schleifschicht frei von zusätzlichen keramischen Oxiden, Karbiden, Nitriden oder Boriden ist.

13. Sägeelement nach einem der Ansprüche 9 bis 12, wobei das Sägeelement eine Sägeperle ist, umfassend eine Metallhülse als ein Metallsubstrat, auf dem die Schleifschicht abgelagert wird.

14. Sägeseil, umfassend ein Stahlseil mit darauf aufgefädelten Sägeperlen, **dadurch gekennzeichnet, dass** die Sägeperlen Sägeelemente nach Anspruch 13 sind.

## Revendications

1. Procédé de fabrication d'un élément de scie comprenant un substrat métallique et une couche abrasive, comprenant les étapes suivantes:
prévoir un substrat métallique;
fournir une alimentation de matériau de matrice métallique sous forme de poudre portée dans un écoulement de gaz audit substrat métallique;
fournir des particules abrasives;
fournir de l'énergie par un faisceau laser;
dans lequel ledit faisceau laser chauffe ledit matériau de matrice métallique sur ledit substrat métallique qui est conçu de manière à se déplacer par rapport audit faisceau laser, pendant que lesdites particules abrasives sont ajoutées à la couche abrasive en formation, ledit chauffage étant effectué à une température de traitement,
**caractérisé en ce que** ladite poudre de matériau de matrice métallique est un mélange comprenant une poudre de métal à bas point de fusion et une poudre de métal à haut point de fusion, ladite poudre de métal à bas point de fusion présentant une température de liquidus inférieure à ladite température de traitement, ladite poudre de métal à haut point de fusion présentant une température de liquidus supérieure à ladite température de traitement.

2. Procédé selon la revendication 1 dans lequel la température de solidus de ladite poudre de métal à haut point de fusion est supérieure à ladite température de traitement.

3. Procédé selon l'une quelconque des revendications 1 ou 2, dans lequel ladite température de traitement est comprise entre 1000°C et 1300°C.

4. Procédé selon l'une quelconque des revendications 1 à 3, dans lequel ladite poudre de métal à bas point de fusion est à base d'un alliage de cuivre.

5. Procédé selon la revendication 4, dans lequel ladite poudre de métal à bas point de fusion comprend en outre un ou plusieurs élément(s) d'un premier groupe d'éléments comprenant l'étain, le zinc, l'argent, le bismuth, l'antimoine, l'indium, le plomb et le phosphore.

6. Procédé selon l'une quelconque des revendications 1 à 5, dans lequel ladite poudre de métal à haut point de fusion contient un métal ou plusieurs métaux d'un second groupe comprenant le nickel, le fer, le cobalt et le manganèse.

7. Procédé selon l'une quelconque des revendications 1 à 6, dans lequel ladite poudre de métal à bas point de fusion et/ou ladite poudre de métal à haut point de fusion comprend/comprennent en outre un métal ou plusieurs métaux du groupe de métaux actifs comprenant le chrome, le titane, le vanadium, le tungstène, le zirconium, le niobium, le molybdène, le tantale et le hafnium.

8. Procédé selon l'une quelconque des revendications 1 à 7, dans lequel la fraction pondérale de ladite poudre de métal à haut point de fusion dans le total de ladite poudre de matériau de matrice métallique est inférieure à 10 %.

9. Elément de scie comprenant un substrat métallique avec une couche abrasive déposée sur celui-ci, ladite couche abrasive comprenant des particules abrasives maintenues dans un matériau de matrice métallique, **caractérisé en ce que** ladite couche abrasive est déposée par un procédé selon l'une quelconque des revendications 1 à 8,
dans lequel la poudre de matériau de matrice métallique appliquée au substrat de métal et un mélange comprenant une poudre de métal à bas point de fusion et une poudre de métal à haut point de fusion, ladite poudre de métal à bas point de fusion présentant une température de liquidus inférieure à la température de traitement, ladite poudre de métal à haut point de fusion présentant une température de liquidus supérieure à la température de traitement; et
dans lequel la dureté Vickers du matériau de matrice métallique est d'au moins 200 HV mesurée à une force d'indentation de 2,94 N maintenue pendant 10 s et pondérée sur au moins dix positions sur une section transversale polie du matériau de matrice métallique.

10. Elément de scie selon la revendication 9, dans lequel la composition globale dudit matériau de matrice métallique comprend au moins 60 % en poids de cuivre et entre 0,5 % en poids à 10 % en poids d'un métal ou de plusieurs métaux d'un second groupe comprenant le nickel, le fer, le cobalt et le manganèse.

11. Elément de scie selon la revendication 10, dans lequel la composition globale dudit matériau de matrice métallique comprend en outre entre 7 % en poids et 20 % en poids d'éléments d'un premier groupe comprenant l'étain le zinc, l'argent, le bismuth, l'antimoine, l'indium, le plomb, et le phosphore, et entre 5 % en poids et 15 % en poids de métaux d'un groupe de métaux actifs comprenant le chrome, le titane, le vanadium, le tungstène, le zirconium, le niobium, le molybdène, le tantale et le hafnium.

12. Elément de scie selon l'une quelconque des revendications 9 à 11, dans lequel ladite couche abrasive est exempte d'oxydes, de carbures, de nitrures ou de borures de céramique ajoutés.

13. Elément de scie selon l'une quelconque des revendications 9 à 12, dans lequel ledit élément de scie est une bille de scie comprenant un manchon métallique comme substrat métallique sur lequel ladite couche abrasive est déposée.

14. Câble de scie comprenant un câble d'acier pourvu de billes de scie enfilées sur celui-ci, **caractérisé en ce que** lesdites billes de scie sont des éléments de scie selon la revendication 13.
